# FASCICULE DE BREVET EUROPEEN

(11) **EP 2 294 489 B1**
(45) Date de publication et mention de la délivrance du brevet: **03.10.2012**
(21) Numéro de dépôt: 09772643.4
(22) Date de dépôt: 04.06.2009
(51) Int. Cl.: G05D 1/00

(54) **PROCÉDÉ ET DISPOSITIF POUR LA DÉTECTION DE CONFLITS DE PILOTAGE ENTRE L'ÉQUIPAGE ET LE PILOTE AUTOMATIQUE D'UN AÉRONEF**
VERFAHREN UND VORRICHTUNG ZUR ERKENNUNG VON STEUERUNGSKONFLIKTEN ZWISCHEN DER CREW UND DEM AUTOPILOT EINES FLUGZEUGS
METHOD AND DEVICE FOR DETECTING PILOTING CONFLICTS BETWEEN THE CREW AND THE AUTOPILOT OF AN AIRCRAFT

(30) Priorité: 09.06.2008 FR 0803189
(43) Date de publication de la demande: 16.03.2011
(73) Titulaire: AIRBUS OPERATIONS (SAS), 31060 Toulouse (FR)
(72) Inventeur: DEHAIS, Frédéric, 31100 Toulouse (FR); LESIRE, Charles, 31055 Toulouse (FR); TESSIER, Catherine, 31055 Toulouse (FR); CHRISTOPHE, Laure, 31770 Colombiers (FR)
(74) Mandataire: Gevers France
(86) Numéro de dépôt international: PCT/FR2009/000648
(87) Numéro de publication internationale: WO 2010/000960

(56) Documents cités:
- EP-A- 1 598 721
- FR-A- 2 689 668
- US-A- 5 585 791
- US-A- 5 836 546

## Description

La présente invention concerne un procédé et un dispositif pour la détection de conflits de pilotage entre l'équipage et le pilote automatique d'un aéronef susceptibles de mettre en cause la sécurité du vol dudit aéronef, ainsi qu'un aéronef pourvu d'un tel dispositif.

On sait que la plupart des aéronefs, notamment les avions de transport civil, sont équipés d'un pilote automatique qui permet de contrôler la trajectoire et la vitesse suivant des consignes préétablies par l'équipage. Un tel pilote automatique est un automate à états finis, chaque état correspondant à un mode de pilotage particulier pour le contrôle du pilotage dans le plan vertical et dans le plan horizontal ainsi que pour la tenue de vitesse.

On sait de plus que le passage d'un mode de pilotage à un autre est généralement réalisé par une action volontaire de l'équipage sur les interfaces de commande du pilote automatique.

Il est également connu que, du fait de l'existence de fortes interactions entre les différents modes de pilotage, une simple action de l'équipage sur les interfaces de commande du pilote automatique peut provoquer une cascade de transitions de modes de ce dernier, cette cascade ayant des conséquences sur le contrôle du pilotage dans le plan vertical et dans le plan horizontal ainsi que sur la tenue de vitesse de l'aéronef.

En outre, une action volontaire de l'équipage sur des commandes de pilotage (par exemple le levier de commande des aérofreins), autres que celles associées au pilote automatique, peut également déclencher des transitions de modes du pilote automatique.

Dans certaines conditions, des transitions de modes peuvent aussi survenir automatiquement sans action volontaire de l'équipage, afin de protéger l'aéronef contre des sorties de domaines de vol.

Quelle que soit la cause du changement de modes de pilotage du pilote automatique, l'équipage en est informé par une ou plusieurs alertes visuelles sur les interfaces de pilotage, ainsi que par des alarmes sonores.

Or, malgré ces systèmes d'alerte visuels et auditifs, les équipages peuvent ne pas s'apercevoir d'au moins un changement de modes du pilote automatique de l'aéronef (par exemple à cause d'une charge de travail importante ou particulièrement stressante) et continuer à agir comme si le pilote automatique était toujours dans le même mode de pilotage souhaité.

En outre, même alertés, les équipages, qui généralement méconnaissent les conditions de déclenchement des transitions de modes, peinent à réagir face à ces changements de modes, ce qui peut conduire à des situations critiques dans lesquelles les équipages se rendent par exemple compte que le pilote automatique effectue des actions non souhaitées ; toutefois, ces équipages ne connaissent généralement pas la procédure à appliquer pour revenir au mode de pilotage souhaité.

Par ailleurs, une défaillance du pilote automatique non détectée et non signalée peut entraîner une modification de la trajectoire de l'aéronef sans que l'équipage en soit averti.

La présente invention a pour objet de remédier à ces inconvénients et notamment de détecter de tels conflits de pilotage pour en avertir l'équipage.

A cette fin, selon l'invention, le procédé pour la détection de conflits de pilotage entre l'équipage et le pilote automatique d'un aéronef dans lequel est programmée une trajectoire automatique, ladite trajectoire automatique étant définie par des valeurs de paramètres relatifs à la navigation souhaitées par l'équipage dudit aéronef, est remarquable en ce que, de façon séquentielle :
a) on vérifie que les valeurs réelles desdits paramètres relatifs à la navigation convergent vers lesdites valeurs souhaitées correspondantes dans un délai de convergence prédéterminé ;
b) dans le cas où au moins une desdites valeurs réelles ne converge pas, dans ledit délai de convergence, vers la valeur souhaitée correspondante, on effectue un calcul prédictif, à des instants futurs successifs, de la valeur d'au moins un paramètre particulier choisi parmi lesdits paramètres relatifs à la navigation ; et
c) dans le cas où la valeur prédite dudit paramètre particulier est supérieure à un seuil prédéfini correspondant, on émet une alerte à l'attention de l'équipage dudit aéronef de manière à l'avertir d'un conflit de pilotage apte à mettre en cause la sécurité du vol dudit aéronef.

Ainsi, le procédé de l'invention permet de détecter des conflits de pilotage entre l'équipage et le pilote automatique de l'aéronef sans avoir besoin de les modéliser ou de les définir a priori. Dans la mise en oeuvre du procédé conforme à la présente invention, ledit calcul prédictif dudit paramètre particulier peut être réalisé de toute manière connue, par exemple à l'aide d'un dispositif à filtre de Kalman ou à filtre particulaire.

En outre, même en cas de panne du pilote automatique non détectée, l'équipage est averti que l'aéronef ne poursuit pas la trajectoire automatique souhaitée.

Avantageusement, ladite alerte à l'attention de l'équipage comprend une information sur l'origine dudit conflit de pilotage.

Ainsi, grâce à cette information pertinente, l'équipage est apte à réagir de façon appropriée au conflit de pilotage pour revenir à une situation normale sécurisée.

Par ailleurs, on notera que :
- le document EP-A-1 598 721, qui décrit un procédé de guidage automatique pour faire voler un aéronef à basse altitude le long d'une section de trajectoire déterminée entre une première et une seconde phases de vol (par exemple des phases de croisière), ne prévoit aucune des étapes a), b) et c) du procédé de la présente demande. Ce document n'a donc ni la même fin que la présente invention (puisque son but est de guider l'aéronef) ni ne met en oeuvre les mêmes moyens que ceux de cette dernière (il n'y a notamment aucun moyen de calcul apte à réaliser un calcul prédictif de la valeur d'un ou plusieurs paramètres particuliers relatifs à la navigation à des instants futurs successifs) ;
- le document US-5,585,791 concerne un procédé de détection d'une déviation de l'altitude courante d'un aéronef, piloté par un pilote automatique embarqué, par rapport à une attitude prédéterminée pour émettre une alerte en cas de dépassement de cette dernière d'un seuil prédéfini. La technique décrite par ce document ne met en oeuvre ni de suivi de convergence de l'altitude courante vers une valeur souhaitée, dans un délai de convergence prédéfini, ni de calcul prédictif, en cas d'absence de convergence, de la valeur d'un paramètre relatif à la navigation, ni même encore d'utilisation de cette valeur prédite pour éventuellement déclencher une alerte ; et
- le document US-5,836,546 divulgue un procédé pour protéger un avion, piloté par un pilote automatique, contre des situations critiques de sous-vitesse. Ce procédé met en oeuvre une comparaison de la vitesse courante de l'avion à une vitesse minimale prédéterminée pour établir un ordre d'ajustement des paramètres de vol de l'avion à destination du pilote automatique. Aucune vérification de convergence, ni calcul prédictif de valeurs de paramètres, conformément à la présente invention, n'est prévu par ce document.

Selon l'invention, ladite vérification a) met de préférence en oeuvre le modèle des transitions des modes de pilotage associé audit pilote automatique et des équations de la mécanique du vol propres audit aéronef.

L'invention concerne également un dispositif pour la mise en oeuvre du procédé précité. Un tel dispositif à bord d'un aéronef pourvu d'un pilote automatique dans lequel est programmée une trajectoire automatique, ladite trajectoire automatique étant définie par des valeurs de paramètres relatifs à la navigation souhaitées par l'équipage dudit aéronef, est remarquable en ce qu'il comporte :
- des moyens de vérification, recevant les valeurs souhaitées desdits paramètres relatifs à la navigation ainsi que les valeurs réelles correspondantes, pour vérifier que lesdites valeurs réelles convergent vers lesdites valeurs souhaitées correspondantes dans un délai de convergence prédéterminé ;
- des moyens de calcul, recevant la valeur réelle d'au moins un paramètre particulier choisi parmi lesdits paramètres relatifs à la navigation, pour réaliser un calcul prédictif de la valeur dudit paramètre particulier à des instants futurs successifs, dans le cas où lesdits moyens de vérification détectent l'absence de convergence d'au moins une desdites valeurs réelles, dans ledit délai de convergence, vers la valeur souhaitée correspondante ;
- des moyens de comparaison, recevant la valeur prédite dudit paramètre particulier, pour la comparer à un seuil prédéfini correspondant ; et
- des moyens d'alerte pour émettre une alerte à l'attention de l'équipage, dans le cas où lesdits moyens de comparaison détectent que ladite valeur prédite est supérieure audit seuil prédéfini correspondant.

L'invention concerne de plus un aéronef. Un tel aéronef est remarquable en ce qu'il comporte le dispositif tel que mentionné ci-dessus.

Les figures du dessin annexé feront bien comprendre comment l'invention peut être réalisée. Sur ces figures, des références identiques désignent des éléments semblables.

La figure 1 représente schématiquement, sous forme synoptique, un mode de réalisation particulier de la présente l'invention.

Les figures 2 et 3 illustrent deux exemples de mise en oeuvre de l'invention.

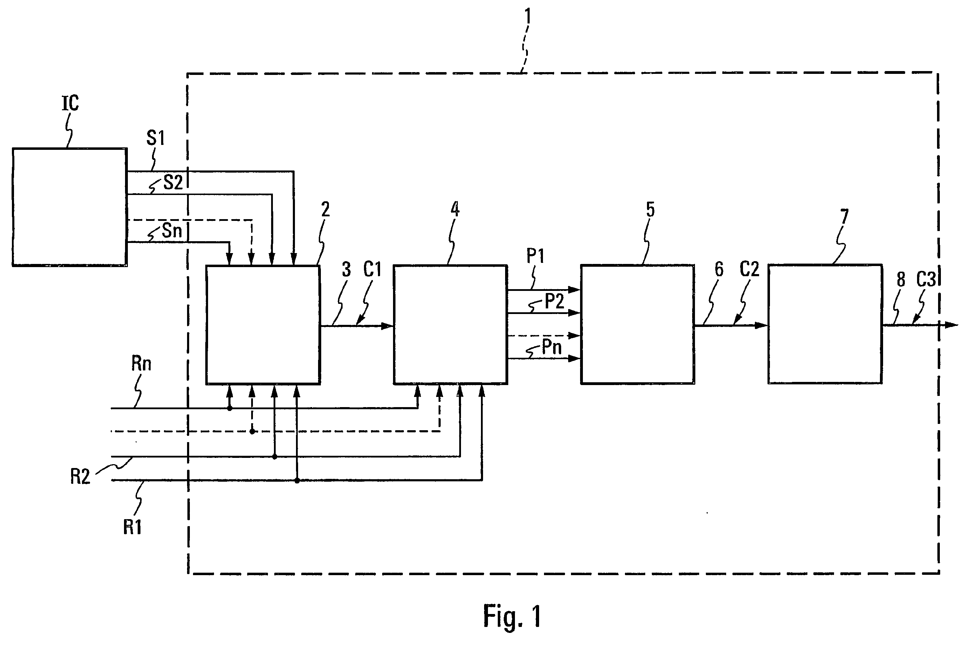

Sur la figure 1, on a représenté le schéma synoptique d'un exemple de dispositif 1 mettant en oeuvre l'invention et monté à bord d'un aéronef (non représenté).

On y a de plus illustré schématiquement les interfaces de commande IC du pilote automatique de l'aéronef. Le pilote automatique est apte à engendrer des ordres de pilotage pour l'aéronef (non représenté), à partir d'une trajectoire souhaitée par les pilotes et que ceux-ci ont programmée dans ledit pilote automatique à partir des interfaces de commande IC sous la forme de valeurs souhaitées de paramètres relatifs à la navigation (par exemple la vitesse, l'altitude, le cap, etc ...).

Le dispositif 1 comporte notamment :
- des moyens de vérification 2 qui reçoivent des signaux S1, S2, ..., Sn représentatifs des valeurs des paramètres relatifs à la navigation souhaitées par les pilotes, en provenance des interfaces de commande IC du pilote automatique, et des signaux R1, R2, ..., Rn représentatifs des valeurs réelles de ces mêmes paramètres en provenance de moyens de mesure (non représentés). A partir du modèle des transitions des modes de pilotage associé au pilote automatique et des équations de la mécanique du vol propres à l'aéronef, les moyens de vérification 2 sont aptes à vérifier périodiquement (selon une période prédéfinie) que chacune des valeurs réelles converge vers la valeur souhaitée correspondante dans un délai de convergence prédéterminé. Lorsqu'au moins une des valeurs réelles ne converge pas vers la valeur souhaitée correspondante dans ce délai de convergence, les moyens de vérification 2 sont aptes à engendrer, à leur sortie 3, un signal C1 représentatif de l'absence de convergence d'au moins une des valeurs réelles ;
- des moyens de calcul 4 qui reçoivent l'ensemble des signaux R1, R2, ..., Rn et qui sont activés par le signal C1. Ainsi, lorsque le signal C1 apparaît à la sortie 3 des moyens de vérification 2, les moyens de calcul 4 sont aptes à effectuer un calcul prédictif, à des instants futurs successifs, de la valeur de certains desdits paramètres relatifs à la navigation, de préférence différents du ou des paramètres dont les valeurs réelles ne convergeant pas. Bien entendu, on peut envisager que les moyens de calcul soient aptes, grâce à un dispositif à filtre de Kalman ou à filtre particulaire, à effectuer un calcul prédictif de la valeur de l'ensemble des paramètres relatifs à la navigation, ou bien d'un seul paramètre correctement choisi. Les moyens de calcul 4 sont alors aptes à délivrer en sortie des signaux P1, P2, ..., Pn représentatifs des valeurs prédites ;
- des moyens de comparaison 5, qui reçoivent les signaux P1, P2, ..., Pn, sont activés par ces derniers. Ainsi, lorsque les signaux P1, P2, ..., Pn apparaissent en sortie des moyens de calcul 4, les moyens de comparaison 5 sont aptes à comparer chacune des valeurs prédites (associées aux signaux P1, P2, ..., Pn) à un seuil prédéfini correspondant. Lorsqu'au moins une desdites valeurs prédites dépasse le seuil correspondant, les moyens de comparaison 5 sont aptes à engendrer, à leur sortie 6, un signal C2 représentatif du fait qu'un conflit de pilotage entre le pilote automatique et les pilotes de l'aéronef amène à mettre en cause la sécurité du vol et risque de conduire l'aéronef :
   ■ soit à un dépassement de son niveau de vol souhaité ;
   ■ soit à un écart avec sa trajectoire horizontale souhaitée ;
   ■ soit à une sortie de domaine de vol ;
   ■ soit à une collision avec le terrain ou un autre aéronef ;
   ■ etc ...
   En outre, le signal C2 peut avantageusement comporter des informations représentatives du ou des paramètres relatifs à la navigation dont les valeurs prédites non attendues sont à l'origine du conflit de pilotage ; et
- des moyens d'alerte 7 commandés par ledit signal C2.

Ainsi, lorsque le signal C2 apparaît à la sortie 6 des moyens de comparaison 5 (signifiant qu'un conflit de pilotage amène à mettre en cause la sécurité du vol de l'aéronef), les moyens d'alerte 7 sont aptes à émettre, à l'attention des pilotes, une alerte sonore dans le cockpit de l'aéronef et une alerte visuelle sur les interfaces de pilotage. Avantageusement, selon l'invention, à partir des informations contenues dans le signal C2, les moyens d'alerte 7 sont également aptes à délivrer, à leur sortie 8, un signal C3 représentatif d'informations pertinentes précisant, par exemple, le ou les paramètres dont les valeurs prédites inattendues impliquent une mise en cause de la sécurité du vol de l'aéronef. Ces informations pertinentes peuvent ensuite apparaître sur les interfaces de pilotage de l'aéronef pour que les pilotes puissent connaître l'origine du conflit de pilotage et ainsi effectuer les opérations appropriées pour revenir à une situation normale sécurisée.

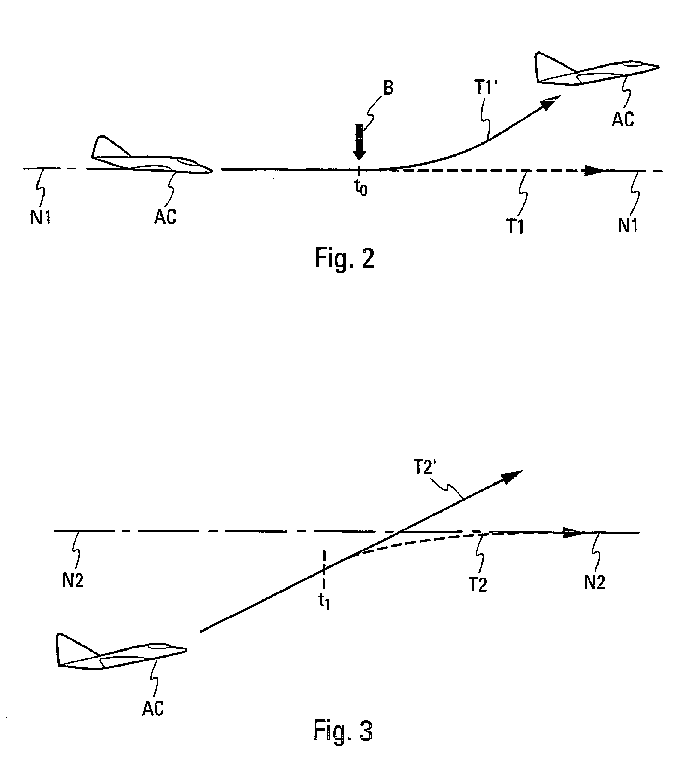

Les figures 2 et 3 illustrent deux situations (parmi d'autres non représentées) dans lesquelles la présente invention contribue à améliorer la sécurité aérienne.

Sur la figure 2, on a représenté un aéronef AC à bord duquel est monté le dispositif 1 précédemment décrit. L'aéronef AC est en palier à un niveau de vol d'altitude N1 (par exemple supérieur à 35 000 pieds) et son pilote automatique est connecté afin de contrôler la trajectoire automatique T1 correspondante. A l'instant to, sous l'effet d'une turbulence (symbolisée par la flèche B), la vitesse de l'aéronef AC augmente jusqu'à dépasser la vitesse maximale autorisée, ce qui a pour conséquence de déconnecter le pilote automatique et d'amener l'aéronef AC à se cabrer. Dans cette situation, le dispositif 1 détecte que les valeurs réelles de certains paramètres relatifs à la navigation (par exemple pour tenir le niveau de vol d'altitude N1) ne convergent pas vers les valeurs correspondantes souhaitées par les pilotes. Le dispositif 1 conforme à l'invention est alors capable de prédire que la nouvelle trajectoire T1' met en cause la sécurité de l'aéronef AC en le faisant changer de niveau de vol. Il avertit ensuite les pilotes de cet événement susceptible de mettre en cause la sécurité du vol en leur communiquant des informations sur l'origine du changement de trajectoire.

Dans l'exemple de la figure 3, l'aéronef AC est en phase de montée dans un mode de pilotage donné pour rejoindre l'altitude N2 et le pilote automatique est connecté afin de contrôler la trajectoire automatique T2 correspondante. A l'instant t1, pour une certaine raison, une panne non détectée du pilote automatique (par exemple une perte de canal de l'unité de contrôle de vol FCU (pour Flight Control Unit)) amène l'aéronef AC à poursuivre sa montée en dépassant l'altitude N2. Dans cette situation, le dispositif 1 détecte que les valeurs réelles de certains paramètres relatifs à la navigation (par exemple pour atteindre puis maintenir le niveau de vol d'altitude N2) ne convergent pas vers les valeurs correspondantes souhaitées par les pilotes. Le dispositif 1 est alors capable de prédire que la nouvelle trajectoire T2' met en cause la sécurité de l'aéronef AC en le faisant changer de niveau de vol. Il avertit alors l'équipage de cette situation critique en l'informant de l'origine de la modification de la trajectoire initialement programmée.

## Revendications

1. Procédé pour la détection de conflits de pilotage entre l'équipage et le pilote automatique d'un aéronef (AC) dans lequel est programmée une trajectoire automatique (T1, T2), ladite trajectoire automatique (T1, T2) étant définie par des valeurs de paramètres relatifs à la navigation souhaitées par l'équipage dudit aéronef (AC),
**caractérisé en ce que**, de façon séquentielle :
a) on vérifie que les valeurs réelles desdits paramètres relatifs à la navigation convergent vers lesdites valeurs souhaitées correspondantes dans un délai de convergence prédéterminé ;
b) dans le cas où au moins une desdites valeurs réelles ne converge pas, dans ledit délai de convergence, vers la valeur souhaitée correspondante, on effectue un calcul prédictif, à des instants futurs successifs, de la valeur d'au moins un paramètre particulier choisi parmi lesdits paramètres relatifs à la navigation ; et
c) dans le cas où la valeur prédite dudit paramètre particulier est supérieure à un seuil prédéfini correspondant, on émet une alerte à l'attention de l'équipage dudit aéronef (AC) de manière à l'avertir d'un conflit de pilotage apte à mettre en cause la sécurité du vol dudit aéronef (AC).

2. Procédé selon la revendication 1,
**caractérisé en ce que** ladite alerte à l'attention de l'équipage comprend une information sur l'origine dudit conflit de pilotage.

3. Procédé selon l'une des revendications 1 ou 2,
**caractérisé en ce que** ladite vérification a) met en oeuvre le modèle des transitions des modes de pilotage associé audit pilote automatique et des équations de la mécanique du vol propres audit aéronef (AC).

4. Dispositif pour la mise en oeuvre du procédé spécifié sous l'une des revendications 1 à 3, à bord d'un aéronef (AC) pourvu d'un pilote automatique dans lequel est programmée une trajectoire automatique (T1, T2), ladite trajectoire automatique (T1, T2) étant définie par des valeurs de paramètres relatifs à la navigation souhaitées par l'équipage dudit aéronef (AC),
**caractérisé en ce qu'**il comporte :
- des moyens des moyens de vérification (2), recevant les valeurs souhaitées desdits paramètres relatifs à la navigation ainsi que les valeurs réelles correspondantes, pour vérifier que lesdites valeurs réelles convergent vers lesdites valeurs souhaitées correspondantes dans un délai de convergence prédéterminé ;
- des moyens de calcul (4), recevant la valeur réelle d'au moins un paramètre particulier choisi parmi lesdits paramètres relatifs à la navigation, pour réaliser un calcul prédictif de la valeur dudit paramètre particulier à des instants futurs successifs, dans le cas où lesdits moyens de vérification détectent l'absence de convergence d'au moins une desdites valeurs réelles, dans ledit délai de convergence, vers la valeur souhaitée correspondante ;
- des moyens de comparaison (5), recevant la valeur prédite dudit paramètre particulier, pour la comparer à un seuil prédéfini correspondant ; et
- des moyens d'alerte (7) pour émettre une alerte à l'attention de l'équipage, dans le cas où lesdits moyens de comparaison (5) détectent que ladite valeur prédite est supérieure audit seuil prédéfini correspondant.

5. Aéronef,
**caractérisé en ce qu'**il comporte un dispositif (1) tel que spécifié sous la revendication 4.

## Claims

1. A method for detecting piloting conflicts between the crew and the autopilot of an aircraft (AC), wherein an automatic trajectory (T1, T2) is programmed, said automatic trajectory (T1, T2) being defined by values of navigation parameters desired by the crew of said aircraft (AC), **characterized in that** sequentially:
a) it is checked whether the actual values of said navigation parameters converge on said corresponding desired values within a predetermined convergence period;
b) in the case where at least one of said actual values does not converge, within said convergence period, on the corresponding desired value, a predictive calculation is carried out, at consecutive future moments, of the value of at least one particular parameter selected amongst said navigation parameters; and
c) in the case where the predicted value of said particular parameter is higher than a corresponding predefined threshold, an alarm is emitted for the crew of said aircraft (AC) so as to notify them about a piloting conflict being able to jeopardize the flight safety of said aircraft (AC).

2. A method according to claim 1,
**characterized in that** said alarm for the crew comprises a piece of information on the origin of said piloting conflict.

3. A method according to any one of claims 1 or 2, **characterized in that** said checking a) implements the
model of transitions of piloting modes associated with said autopilot and of equations of the flight mechanics being typical of said aircraft (AC).

4. A device for implementing the method as specified according to any one of claims 1 to 3, on board an aircraft (AC) provided with an autopilot, where an automatic trajectory (T1, T2) is programmed, said automatic trajectory (T1, T2) being defined by values of navigation parameters desired by the crew of said aircraft (AC),
**characterized in that** it comprises:
- checking means (2), receiving the desired values of said navigation parameters as well as the corresponding actual values, for checking that said actual values converge on said corresponding desired values within a predetermined convergence period;
- calculation means (4), receiving the actual values of at least one particular parameter selected amongst said navigation parameters, for carrying out a predictive calculation of the value of said particular parameter at consecutive future moments, in the case where said checking means detect the absence of convergence of at least one of said actual values, within said convergence period, on the corresponding desired value;
- comparison means (5), receiving the predicted value of said particular parameter, for comparing it with a corresponding predefined threshold; and
- alarming means (7) for emitting an alarm for the crew, in the case where said comparison means (5) detect that said predicted value is higher than said corresponding predefined threshold.

5. An aircraft,
**characterized in that** it comprises a device (1) such as specified according to claim 4.

## Patentansprüche

1. Verfahren zur Erkennung von Steuerungskonflikten zwischen der Crew und dem Autopiloten eines Flugzeugs (AC), in dem eine automatische Strecke (T1, T2) programmiert ist, wobei die besagte automatische Strecke (T1, T2) durch Parameterwerte bezüglich der von der Crew des besagten Flugzeugs (AC) gewünschten Navigation definiert wird, **dadurch gekennzeichnet, dass** auf sequenzielle Art:
a) geprüft wird, ob die tatsächlichen Werte der besagten Parameter bezüglich der Navigation innerhalb einer vorbestimmten Konvergenzzeit zu den besagten entsprechenden gewünschten Werten konvergieren;
b) falls mindestens einer der besagten tatsächlichen Werte innerhalb der besagten Konvergenzzeit nicht zum entsprechenden gewünschten Wert konvergiert, wird an aufeinanderfolgenden zukünftigen Zeitpunkten eine Vorhersagerechnung des Wertes mindestens eines besonderen Parameters ausgeführt, unter den besagten Parametern bezüglich der Navigation gewählt;
und
c) falls der vorhergesagte Wert des besagten besonderen Parameters größer als ein entsprechender vordefinierten Schwellenwert ist, wird eine Warnmeldung an die Crew des besagten Flugzeugs (AC) gesendet, um sie vor einem Steuerungskonflikt zu warnen, der dazu der Lage ist, die Sicherheit des Fluges des besagten Flugzeugs (AC) zu gefährden.

2. Verfahren nach Anspruch 1, **dadurch gekennzeichnet, dass** die besagte Warnmeldung an die Crew eine Information über den Ursprung des besagten Steuerungskonflikts enthält.

3. Verfahren nach einem der Ansprüche 1 oder 2, **dadurch gekennzeichnet, dass** die besagte Prüfung a) das Modell der Übergänge der Steuermodi des besagten Autopiloten und der Gleichungen der des Fluges des besagten Flugzeugs (AC) eigenen Mechanik umsetzt.

4. Vorrichtung zur Umsetzung des in einem der Ansprüche 1 bis 3 angeführten Verfahrens an Bord eines Flugzeugs (AC), das mit einem Autopiloten versehen ist, in dem eine automatische Strecke (T1, T2) programmiert wurde, wobei die besagte automatische Strecke (T1, T2) durch Parameterwerte bezüglich der von der Crew des besagten Flugzeugs (AC) gewünschten Navigation definiert wird, **dadurch gekennzeichnet, dass** sie enthält:
- Prüfmittel (2), die die gewünschten Werte der besagten Parameter bezüglich der Navigation sowie die entsprechenden tatsächlichen Werte erhalten, um zu prüfen, ob die besagten tatsächlichen Werte innerhalb einer vorbestimmten Konvergenzzeit zu den besagten entsprechenden gewünschten Werten konvergieren;
- Rechenmittel (4), die den tatsächlichen Wert mindestens eines der unter den besagten Parametern bezüglich der Navigation gewählten besonderen Parameters erhalten, um an aufeinanderfolgenden zukünftigen Zeitpunkten eine Vorhersagerechnung des Werts des besagten besonderen Parameters auszuführen, falls die besagten Prüfmittel das Fehlen innerhalb der besagten Konvergenzzeit einer Konvergenz mindestens einer der besagten tatsächlichen Werte zum entsprechenden gewünschten Wert erkennen;
- Vergleichsmittel (5), die den vorhergesagten Wert des besagten besonderen Parameters erhalten, um ihn mit einem entsprechenden vordefinierten Schwellenwert zu vergleichen;
- und Warnmittel (7) zum Senden einer Warnmeldung an die Crew, falls die besagten Vergleichsmittel (5) erkennen, dass der besagte vorhergesagte Wert größer als der besagte entsprechende vordefinierte Schwellenwert ist.

5. Flugzeug, **dadurch gekennzeichnet, dass** es eine Vorrichtung (1) wie in Anspruch 4 angegeben enthält.
